(19) Europäisches Patentamt
European Patent Office
Office européen des brevets

(11) EP 0 703 278 A2

(12) EUROPÄISCHE PATENTANMELDUNG

(43) Veröffentlichungstag: **27.03.1996 Patentblatt 1996/13**

(51) Int. Cl.[6]: **C08L 69/00**, C08L 23/22

(21) Anmeldenummer: **95112504.6**

(22) Anmeldetag: **09.08.1995**

(84) Benannte Vertragsstaaten: **DE FR GB IT**

(30) Priorität: **22.08.1994 DE 4429698**

(71) Anmelder: **BAYER AG**
**D-51368 Leverkusen (DE)**

(72) Erfinder:
- **Köhler, Burkhard, Dr.**
  **D-47829 Krefeld (DE)**
- **Bier, Peter, Dr.**
  **D-47800 Krefeld (DE)**
- **Weider, Richard, Dr.**
  **D-51381 Leverkusen (DE)**
- **Scholl, Thomas, Dr.**
  **D-51469 Bergisch Gladbach (DE)**

# (54) Mischungen aus speziellen Dihydroxydiphenylcycloalkan-polycarbonaten und Polyisobutylen

(57) Mischungen aus

A) 75 bis 99,5 Gew.-% hochmolekularem, thermoplastischem, aromatischem Polycarbonat mit Molekulargewicht $\overline{M}_w$ (Gewichtsmittel) von mindestens 10.000, vorzugsweise von 20.000 bis 300.000, das bifunktionelle Carbonatstruktureinheiten der Formel (I) enthält,

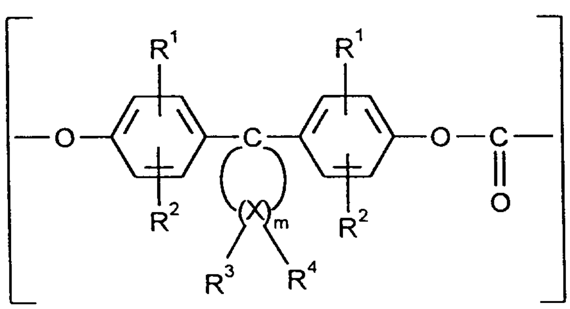
(I),

worin

| | |
|---|---|
| $R^1$ und $R^2$ | unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl, |
| m | eine ganze Zahl von 4 bis 7, bevorzugt 4 oder 5, |
| $R^3$ und $R^4$ | für jedes X individuell wählbar, unabhängig voneinander Wasserstoff oder $C_1$-$C_6$-Alkyl und |
| X | Kohlenstoff bedeuten, mit der Maßgabe, daß an mindestens einem Atom X $R^3$ und $R^4$ gleichzeitig Alkyl bedeuten. |

B) 0,5 bis 25 Gew.-% Polyisobutylen

und ihre Herstellung.

EP 0 703 278 A2

Printed by Rank Xerox (UK) Business Services
2.9.13/3.4

## Beschreibung

Die Erfindung betrifft Mischungen aus speziellen Dihydroxydiphenylcycloalkanpolycarbonaten und Polyisobutylen.

Erfindungsgemäß geeignete Dihydroxydiphenylcycloalkan-polycarbonate sind bekannt und in der europäischen Patentschrift 395 953 beschrieben. Besonders bevorzugt ist das Polycarbonat auf Basis 1,1-Bis-(4-hydroxyphenyl)-3,3,5-trimethylcyclohexan und das Copolycarbonat dieses Bisphenols und von Bisphenol A.

Diese Polycarbonate zeichnen sich durch eine hohe Wärmeformbeständigkeit aus; ihre Fließfähigkeit, Spannungsrißbeständigkeit und Zähigkeit läßt sich dagegen noch verbessern.

Der Erfindung liegt die Erkenntnis zugrunde, daß die genannten Polycarbonate sich mit Polyisobutylen mischen lassen, daß die Mischungen eine verbesserte Zähigkeit ohne Beeinträchtigung der Wärmeformbeständigkeit zeigen und ein verbessertes Spannungsrißverhalten bei ebenfalls verbesserter Strukturviskosität der Schmelze.

Gegenstand der Erfindung sind Mischungen aus

A) 75 bis 99,5 Gew.-%, vorzugsweise 85 bis 97 Gew.-% hochmolekularem, thermoplastischem, aromatischem Polycarbonat mit Molekulargewicht $\overline{M}_w$ (Gewichtsmittel) von mindestens 10.000, vorzugsweise von 20.000 bis 300.000, das bifunktionelle Carbonatstruktureinheiten der Formel (I) enthält,

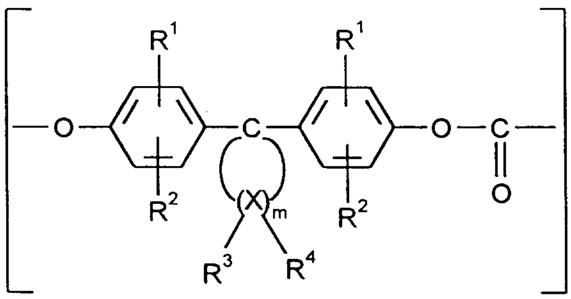

(I),

worin

| | |
|---|---|
| $R^1$ und $R^2$ | unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl, |
| m | eine ganze Zahl von 4 bis 7, bevorzugt 4 oder 5, |
| $R^3$ und $R^4$ | für jedes X individuell wählbar, unabhängig voneinander Wasserstoff oder $C_1$-$C_6$-Alkyl und |
| X | Kohlenstoff bedeuten, mit der Maßgabe, daß an mindestens einem Atom X $R^3$ und $R^4$ gleichzeitig Alkyl bedeuten. |

B) 0,5 bis 25 Gew.-%, vorzugsweise 3 bis 15 Gew.-% Polyisobutylen.

Die Polycarbonate A) und ihre Herstellung sind Gegenstand des Europäischen Patents 359 953. Die Polycarbonate selbst und ihre Herstellung sind dort ausführlich beschrieben.

Ausgangsprodukte für die Herstellung der Polycarbonate A) sind demnach Dihydroxydiphenylcycloalkane der Formel (Ia)

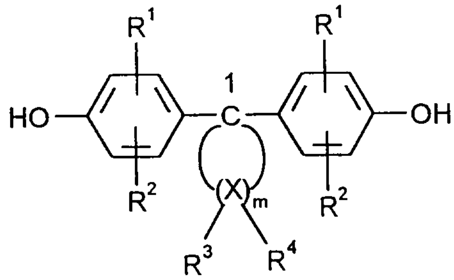

(Ia),

worin
X $R^1$, $R^2$, $R^3$, $R^4$ und m die für die Formel (I) genannte Bedeutung haben.

Bevorzugt sind an 1 bis 2 Atomen X, insbesondere nur an einem Atom X, $R^3$ und $R^4$ gleichzeitig Alkyl.

Bevorzugter Alkylrest ist Methyl; die X-Atome in α-Stellung zu dem Diphenylsubstituierten C-Atom (C-1) sind bevorzugt nicht dialkylsubstituiert, dagegen ist die Alkylsubstitution in β-Stellung zu C-1 bevorzugt.

Bevorzugt sind Dihydroxydiphenylcycloalkane mit 5 und 6 Ring-C-Atomen im cycloaliphatischen Rest (m = 4 oder 5 Formel Ia), beispielsweise die Diphenole der Formeln (Ib) bis (Id),

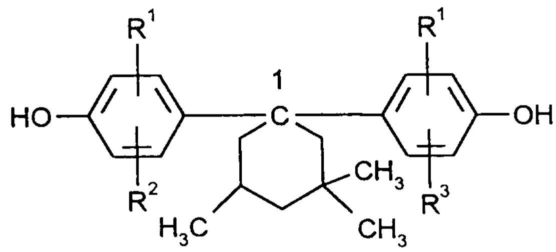

(Ib),

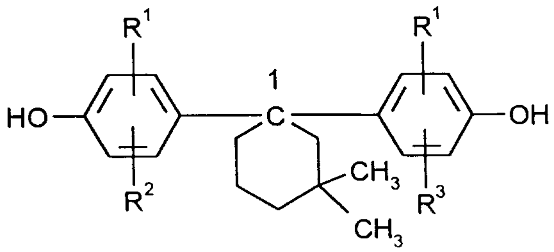

(Ic),

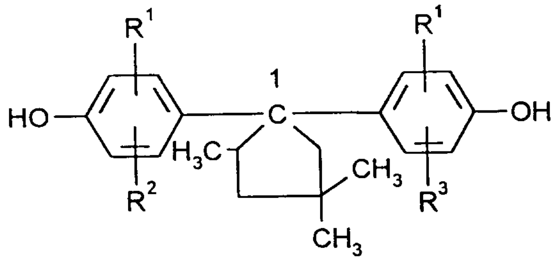

(Id),

wobei das 1,1-Bis-(4-hydroxyphenyl)-3,3,5-trimethylcyclohexan (Formel Ib mit $R^1$ und $R^2$ gleich H) besonders bevorzugt ist.

Es können sowohl ein Diphenol der Formel (Ia) unter Bildung von Homopolycarbonaten als auch mehrere Diphenole der Formel (Ia) unter Bildung von Copolycarbonaten verwendet werden.

Außerdem können die Diphenole der Formel (Ia) auch im Gemisch mit anderen Diphenolen, beispielsweise mit denen der Formel (Ie)

$$HO\text{-}Z\text{-}OH \quad \text{(Ie)},$$

zur Herstellung von hochmolekularen, thermoplastischen, aromatischen Polycarbonaten verwendet werden.

Geeignete andere Diphenole der Formel (Ie) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (Ia) oder Heteroatome als Brückenglieder enthalten kann.

Bevorzugte andere Diphenole sind beispielsweise:

4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, $\alpha,\alpha$-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, $\alpha,\alpha$-Bis-(3,5-dimethyl-4-hydroxyphenyl)-p-diisopropylbenzol, 2,2-Bis-(3,5-dichlor-4-hydroxyphenyl)-propan und 2,2-Bis-(3,5-dibrom-4-hydroxyphenyl)-propan.

Besonders bevorzugte Diphenole der Formel (Ie) sind beispielsweise:

2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydrophenyl)-propan und 1,1-Bis-(4-hydroxyphenyl)-cyclohexan.

Insbesondere ist 2,2-Bis-(4-hydroxyphenyl)-propan bevorzugt. Die anderen Diphenole können sowohl einzeln als auch im Gemisch eingesetzt werden.

Das molare Verhältnis von Diphenolen der Formel (Ia) zu den gegebenenfalls mitzuverwendenden anderen Diphenolen der Formel (Ie), reicht von 100 Mol-% (Ia) zu 0 Mol-% (Ie) bis 2 Mol-% (Ia) zu 98 Mol-% (Ie), vorzugsweise von 100 Mol-% (Ia) zu 0 Mol-% (Ie) bis 5 Mol-% (Ia) zu 95 Mol-% (Ie) und insbesondere von 100 Mol-% (Ia) zu 0 Mol-% (Ie) bis 10 Mol-% (Ia) zu 90 Mol-% (Ie) und ganz besonders von 100 Mol-% (Ia) zu 0 Mol-% (Ie) bis 20 Mol-% (Ia) zu 80 Mol-% (Ie).

Die hochmolekularen Polycarbonate aus den Diphenolen der Formel (Ia), gegebenenfalls in Kombination mit anderen Diphenolen, können nach allen bekannten Polycarbonat-Herstellungsverfahren hergestellt werden. Dabei können die verschiedenen Diphenole sowohl statistisch als auch blockweise miteinander verknüpft sein.

Die Polycarbonate können in an sich bekannter Weise verzweigt sein. Wenn die Verzweigung gewünscht wird, kann sie in bekannter Weise durch Einkondensieren geringer Mengen, vorzugsweise Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen, erreicht werden. Einige Verzweiger mit drei oder mehr als drei phenolischen Hydroxylgruppen sind:

Phloroglucin, 4,6-Dimethyl-2,4,6-tri-(4-hydroxyphenyl)-hepten-2, 4,6-Dimethyl2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5-methyl-benzyl)-4-methylphenol, 2-(4-hydroxyphenyl)-2-(2,4-dihydroxylphenyl)-propan, Hexa-[4-(4-hydroxyphenyl-isopropyl)-phenyl]-orthoterephthalsäureester, Tetra-(4-hydroxyphenyl)-methan, Tetra-[4-(4-hydroxyphenyl-isopropyl)phenoxy]-methan und 1,4-Bis-[4',4''-dihydroxytriphenyl)-methyl]-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonate A dienen monofunktionelle Verbindungen in üblichen Konzentraten. Geeignete Verbindungen sind z.B. Phenol, tert.-Butylphenole oder andere Alkyl-$C_1$-$C_7$-substituierte Phenole. Zur Regelung des Molekulargewichts sind insbesondere kleine Mengen Phenole der Formel (If) geeignet

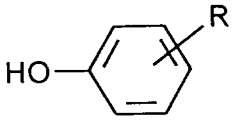

(If),

worin

R einen verzweigten $C_8$- und/oder $C_9$-Alkylrest darstellt.

Bevorzugt ist im Alkylrest R der Anteil an $CH_3$-Protonen zwischen 47 und 89 % und der Anteil der CH- und $CH_2$-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt.

Die Polycarbonate A können vorzugsweise nach dem Phasengrenzflächenverfahren (vgl. H. Schnell "Chemistry and Physics of Polycarbonates", Polymer Reviews, Vol. IX, Seite 33 ff., Interscience Publ. 1964) in an sich bekannter Weise hergestellt werden.

Hierbei werden die Diphenole der Formel (Ia) in wäßrig alkalischer Phase gelöst. Zur Herstellung von Copolycarbonaten mit anderen Diphenolen werden Gemische von Diphenolen der Formel (Ia) und den anderen Diphenolen, beispielsweise denen der Formel (Ie), eingesetzt. Zur Regulierung des Molekulargewichts können Kettenabbrecher z.B. der Formel (If) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0°C und 40°C.

Die gegebenenfalls mitverwendeten Verzweiger (bevorzugt 0,05 bis 2,0 Mol-%) können entweder mit den Diphenolen in der wäßrig alkalischen Phase vorgelegt werden oder in dem organischen Lösungsmittel gelöst vor Phosgenierung zugegeben werden. Neben den Diphenolen der Formel (Ia) und gegebenenfalls anderen Diphenolen (Ie) können auch deren- Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (Ia) und gegebenenfalls Formel (Ie); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorobenzol, Aceton, Acetonitril sowie Mischungen dieser Lösungsmittel, insbesondere Mischungen aus Methylenchlorid und Chlorbenzol. Gegebenenfalls können die mitverwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wäßrige alkalische Phase dient beispielsweise NaOH-Lösung. Die Herstellung der Polycarbonate A nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen, eingesetzt werden. Die Katalysatoren können vor Beginn der Phosgenierung oder während oder auch nach der Phosgenierung zugesetzt werden.

Die Polycarbonate A können nach dem bekannten Verfahren in homogener Phase, dem sogenannten "Pyridinverfahren" sowie nach dem bekannten Schmelzeumesterungsverfahren unter Verwendung von beispielsweise Diphenylcarbonat anstelle von Phosgen hergestellt werden.

Die Polycarbonate A haben bevorzugt Molekulargewicht $M_w$ (Gewichtsmittel, ermittelt durch Gelchromatographie nach vorheriger Eichung) von mindestens 10.000, besonders bevorzugt von 20.000 bis 300.000 und insbesondere von 20.000 bis 80.000.

Die besonders bevorzugten Polycarbonate A sind also solche aus Einheiten der Formel (Ig)

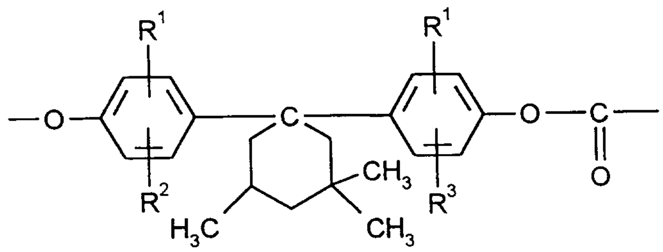

(Ig),

worin $R^1$ und $R^2$ die für Formel (I) genannte Bedeutung haben, besonders bevorzugt aber Wasserstoff sind.

Durch die beliebige Kombination mit anderen Diphenolen, insbesondere mit denen der Formel (Ie) lassen sich zudem die Polycarbonateigenschaften in günstiger Weise variieren. In solchen Copolycarbonaten sind die Diphenole der Formel (Ia) in Mengen von 100 Mol-% bis 2 Mol-%, vorzugsweise in Mengen von 100 Mol-% bis 5 Mol-% und insbesondere in Mengen von 100 Mol-% bis 10 Mol-% und ganz besonders von 100 Mol-% bis 20 Mol-%, bezogen auf die Gesamtmenge von 100 Mol-% an Diphenoleinheiten, in Polycarbonaten enthalten.

Polyisobutylene B) sind kationische Polymerisate von Olefinen und gegebenenfalls Dienen mit einem Gehalt von mindestens 85 % Isobutylen. Polyisobutylene sind unter dem Stichwort "Polyisobutylen" auf Seite 539, Band 5, in Römpp Chemie Lexikon, 9. Auflage, 1992, Georg Thieme Verlag beschrieben. Die Molmasse der erfindungsgemäß verwendeten

Polyisobutylene beträgt 1.000 bis 5.000.000, vorzugsweise 10.000 bis 1.200.000 g/mol. Diese wird ermittelt durch Lichtstreuung.

Als Comonomere für Isobutylen geeignete Diene sind beispielsweise Butadien, Isopren, 2-Chlorbutadien-(1,4), 2-Brombutadien-(1,3), Pentadien, Hexadien, 2-Ethylbutadien-(1,3), 2-Propylbutadien-(1,3), 2-Phenylbutadien-(1,3), 2-Methylpentadien-(1,3) oder 3-Propylhexadien. Andere geeignete olefinische Comonomere sind Styrol, alpha-Methylstyrol, m/p-Methylstyrol oder Divinylbenzol.

Die Mischungen können in Knetern oder Extrudern in der Schmelze bei 260 bis 340°C oder durch Auflösen der Komponenten in Chlorbenzol und/oder Methylenchlorid und gemeinsames Ausdampfen auf dem Ausdampfextruder bei 160 bis 340°C hergestellt werden.

Die erfindungsgemäßen Mischungen zeichnen sich durch eine hohe Zähigkeit, ein gutes Spannungsrißverhalten und durch eine strukturviskose Schmelze aus.

Die Mischungen können durch Spritzguß oder Extrusion oder Blasformen zu Formkörpern oder Halbzeugen oder Hohlkörpern verarbeitet werden. Dabei wird das Blasformen durch die Strukturviskosität der Schmelze erleichtert.

Die Formkörper können als Reflektoren für Schweinwerter, Gehäuse für elektrische oder elektronische Geräte oder für Automobilanwendungen eingesetzt werden.

**Beispiel**

1800 g eines Copolycarbonats aus 65 Mol-% Bisphenol A und 35 Mol-% 1,1-Bishydroxyphenyl-3,3,5-trimethylcyclohexan mit der relativen Lösungsviskosität 1,29 (0,5 % bei 25°C in Methylenchlorid) gelöst in 3 l Chlorbenzol und 8 l Methylenchlorid und 200 g eines Polyisobutylen-Kautschuks der Molmasse 400.000 mit 2 Gew.-% Isopren als Comonomer (Polysar PIB 402®) gelöst in 1,7 l Chlorbenzol werden gemeinsam auf dem Ausdampfextruder (ZSK 32 mit Vakuumdom) bei 320°C eingedampft.

Man erhält ein Material mit der Kerbschlagzähigkeit 40 $kJ/m^2$ (100 % Zähbruch), während das Copolycarbonat selbst eine Kerbschlagzähigkeit von 8 $kJ/m^2$ (100 % Sprödbruch) aufweist.

Ein auf 0,8 % Randfaserdehnung gespannter Stab aus dieser Mischung ist bei 2-minütiger Einwirkung einer Mischung aus Toluol mit Isooctan im Gewichtsverhältnis 1:1 nicht gebrochen (das Copolycarbonat bricht bereits ohne Vorspannung).

Die Schmelzviskosität (gemessen bei 320°C):
bei 100 $sec^{-1}$ 424 Pas / bei 1000 $sec^{-1}$ 136 Pas / bei 1500 $sec^{-1}$ 110 Pas.

Die entsprechenden Werte für das Copolycarbonat ohne PIB-Kautschuk betragen zum Vergleich 1359 Pas / 595 Pas / 458 Pas.

Die Viskositäten der erfindungsgemäßen Mischung liegen niedriger und nehmen bei stärkerer Scherung deutlicher ab als beim reinen Copolycarbonat.

**Patentansprüche**

1. Mischungen aus

   A) 75 bis 99,5 Gew.-%, vorzugsweise 85 bis 97 Gew.-% hochmolekularem, thermoplastischem, aromatischem Polycarbonat mit Molekulargewicht $\overline{M}_w$ (Gewichtsmittel) von mindestens 10.000, vorzugsweise von 20.000 bis 300.000, das bifunktionelle Carbonatstruktureinheiten der Formel (I) enthält,

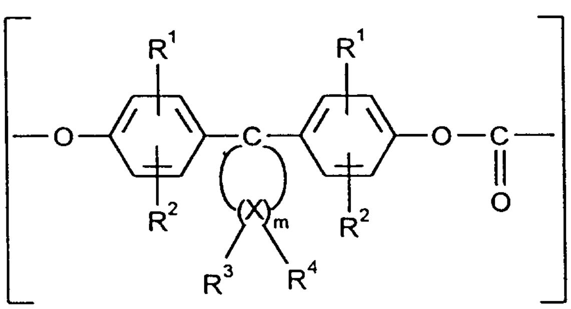

(I),

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5,

$R^3$ und $R^4$ für jedes X individuell wählbar, unabhängig voneinander Wasserstoff oder $C_1$-$C_6$-Alkyl und

X Kohlenstoff bedeuten,
mit der Maßgabe, daß an mindestens einem Atom X $R^3$ und $R^4$ gleichzeitig Alkyl bedeuten.

B) 0,5 bis 25 Gew.-% Polyisobutylen.